# EUROPÄISCHE PATENTANMELDUNG

(11) **EP 2 657 480 A1**
(43) Veröffentlichungstag der Anmeldung: **30.10.2013**
(21) Anmeldenummer: 13165374.3
(22) Anmeldetag: 25.04.2013
(51) Int. Cl.: F02B 37/18, F16K 1/22, F02D 9/10

(54) **Abgasturbolader für eine Brennkraftmaschine**

(30) Priorität: 27.04.2012 DE 102012207104
(71) Anmelder: Bosch Mahle Turbo Systems GmbH & Co. KG, 70376 Stuttgart (DE)
(72) Erfinder: Laubender, Jochen, 71706 Markgröningen (DE)
(74) Vertreter: BRP Renaud & Partner

(57) **Zusammenfassung**

Die Erfindung betrifft einen Abgasturbolader (100) für eine Brennkraftmaschine, insbesondere eines Kraftfahrzeugs,
- mit einem Turbinengehäuse (106), in welchem eine Wastegate-Öffnung (101) angeordnet ist,
- mit einem Wastegate-Klappenmechanismus (102) zum Einstellen eines Öffnungsgrades der Wastegate-Öffnung (101),
- wobei der Wastegate-Klappenmechanismus (102) eine Spindel (103) umfasst, welche mit ihren beiden axialen Enden (104, 105) jeweils drehbar an dem Turbinengehäuse (106) gelagert ist,
- wobei der Wastegate-Klappenmechanismus (102) eine Wastegate-Klappe (107) umfasst, welche drehfest und bezüglich der beiden axialen Enden (104, 105) der Spindel (103) mittig an dieser angebracht ist, derart, dass die Wastegate-Klappe (107) mittels der Spindel (103) drehbar ist zwischen einer geschlossenen Position, in welcher die Wastegate-Klappe (107) die Wastegate-Öffnung (101) verschließt und einer geöffneten Position, in welcher die Wastegate-Klappe (107) die Wastegate-Öffnung (101) zum Durchströmen mit einem Abgas freigibt.

## Beschreibung

Die Erfindung betrifft einen Abgasturbolader für eine Brennkraftmaschine, insbesondere eines Kraftfahrzeugs.

Aus dem Stand der Technik sind Abgasturbolader bekannt, die einen Klappenmechanismus aufweisen, mittels welchem ein Ladedruck in dem Abgasturbolader präzise gesteuert werden kann. Insbesondere wird mittels einer derartigen Steuerung des Ladedrucks verhindert, dass von dem Abgasturbolader eine zu große Menge an Luft verdichtet wird, was unter Umständen zu einer Überlastung der von dem Abgasturbolader aufgeladenen Brennkraftmaschine führen könnte. Die Steuerung des Ladedrucks in einem derartigen Abgasturbolader erfolgt dabei in herkömmlicher Art und Weise unter Verwendung eines Klappenmechanismus, bei dem an einer drehbaren Spindel eine Wastegate-Klappe angebracht ist, welche ein Wastegate-Ventil durch Drehen der Spindel bei Bedarf öffnet und wieder schließt. Die Steuerung des Wastegate-Ventils erfolgt dabei üblicherweise durch einen Aktuator, der mittels eines Kopplungselements die Wastegate-Klappe in Abhängigkeit von bestimmten Steuersignalen öffnen und wieder schließen kann. In unterschiedlichen Betriebsbereichen des Abgasturboladers, die insbesondere einen Teillast- oder Vollast-Betriebszustand umfassen können, wird der Ladedruck mittels einer Regelung der Turbinenleistung eingestellt. In diesen Betriebsbereichen wird die Wastegate-Klappe gegen einen den Klappenmechanismus durchströmenden Abgasmassenstrom soweit zugezogen, inwieweit Aufstaudruck oberhalb der Turbine zur Bereitstellung der benötigten Turbinen- bzw. Verdichterleistung benötigt wird. Hierzu ist eine positionsgenaue Einstellung der Position der Wastegate-Klappe erforderlich.

Bedingt durch das Zuziehen entgegen des Abgasmassenstroms ist dabei das System in der Regel nicht völlig kraftfrei.

In Betriebsbereichen, die ohne Ladedruck dargestellt werden können, also insbesondere im saugmotorischen Teillast-Betriebsbereich, aber auch im Kaltstart-Betriebszustand, kann durch das Öffnen der Wastegate-Klappe ein Verbrauchs- und Emissionsvorteil erzielt werden. Hier erfolgt das Einregeln der Last nicht durch das Wastegate-Ventil, und es ist keine positionsgenaue Einregelung der Wastegate-Klappe erforderlich. Je weiter die Wastegate-Klappe geöffnet und je größer somit der Turbinen-Bypassstrom ist, desto größer ist das Kraftstoff-Einsparpotenzial des Abgasturboladersystems.

Insbesondere in den o.g. Betriebsbereichen kann die Wastegate-Klappe jedoch durch Abgaspulsationen zu unerwünschten mechanischen Schwingungen angeregt werden (sog. "Wastegate-Prasseln"), da einerseits das mittlere Kraftniveau gegenüber der aufgeladenen Teil- und Volllast niedrig (kraftfrei) ist und ein mechanisches Spiel in den Komponenten des Klappenmechanismus unter Umständen zu groß ist.

Derartige mechanische Schwingungen können aufgrund der damit verbundenen Geräuschentwicklung zu einer Komforteinbuße führen, wenn das Abgasturboladersystem in einem Kraftfahrzeug verwendet wird; zudem können derartige mechanische Schwingungen der Wastegate-Klappe zu einem erhöhten Verschleiß und damit zu einer Reduzierung der Lebensdauer des Abgasturboladersystems führen.

Aus der US 2006/0053789 A1 ist ein Abgasturbolader mit einem Turbinengehäuse und einem Wastegate-Klappenmechanismus bekannt, gemäß welchem die Wastegate-Klappe in der Art eines sogenannten "Butterfly"-Ventils ("Schmetterlingsventil") ausgebildet ist. Ein derartiges Butterfly-Ventil stellt jedoch sehr hohe Anforderungen an die Genauigkeit bei der Herstellung und auch bei der Montage der einzelnen Komponenten des Ventils. Insbesondere wird aufgrund der starren Kopplung der Wastegate-Klappe mit der Spindel eine sehr hohe Genauigkeit hinsichtlich der Anordnung des radialen Ventilsitzes des Wastegate-Ventils und auch hinsichtlich der Lagerung der Spindel des Butterfly-Ventils erforderlich; dies gilt vor allem im Hinblick auf einer thermisch bedingter Expansion bzw. Kontraktion des Spindel- oder/und Wastegate-Klappen-Materials und/oder eines thermischen Verzugs des Ventilsitzes im Turbinengehäuse. Ein weiteres Problem von Butterfly-Ventilen besteht in ihrer Anfälligkeit gegenüber kleinen Rußablagerungen im radialen Ventilsitz, welche dazu führen können, dass das Wastegate-Ventil nicht mehr fluiddicht schließen kann, was zu erheblichen Leistungseinbußen des Wastegate-Ventils führen kann.

Es ist daher eine Aufgabe der vorliegenden Erfindung, eine verbesserte Ausführungsform für einen Abgasturbolader bereitzustellen, bei der oben genannten Nachteile beseitig oder zumindest reduziert sind.

Die oben genannte Aufgabe wird gelöst durch eine Vorrichtung gemäß den unabhängigen Patentansprüchen. Bevorzugte Ausführungsformen sind Gegenstand der Unteransprüche.

In einem ersten Aspekt weist der erfindungsgemäße Abgasturbolader ein Turbinengehäuse auf, in welchem eine Wastegate-Öffnung angeordnet ist. Der Abgasturbolader umfasst ferner einen Wastegate-Klappenmechanismus zum Einstellen eines Öffnungsgrades der Wastegate-Öffnung, wobei der Wastegate-Klappenmechanismus eine Spindel umfasst, welche mit ihren beiden axialen Enden jeweils drehbar an dem Turbinengehäuse gelagert ist. Erfindungsgemäß ist eine Wastegate-Klappe drehfest und bezüglich der beiden axialen Enden der Spindel mittig an dieser angebracht, und zwar derart, dass die Wastegate-Klappe mittels der Spindel drehbar ist zwischen einer geschlossenen Position, in welcher die Wastegate-Klappe die Wastegate-Öffnung verschließt und einer geöffneten Position, in welcher die Wastegate-Klappe die Wastegate-Öffnung zum Durchströmen mit einem Abgas freigibt.

Mittels einer derartigen Anordnung wird ein Rückstau des die Wastegate-Öffnung durchströmende Abgases bei wenigstens teilweise geöffneter Wastegate-Klappe gegenüber einem herkömmlichen Wastegate-Klappenmechanismus deutlich reduziert, da bei wenigstens teilweiser Öffnung der Wastegate-Klappe zwei sichelförmige Durchlassspalte in einer Durchströmungsrichtung des Abgases durch die Wastegate-Öffnung entstehen, was insbesondere bei Lastwechseln der Brennkraftmaschine zu einem schnelleren Druckabbau in dem Turbinengehäuse führt. Des Weiteren ermöglicht der erfindungsgemäße Wastegate-Klappenmechanismus eine genaue Steuerung des Betriebspunkts des Abgasturboladers und auch einer diesen verwendenden Brennkraftmaschine, was letztlich zu einem reduzierten Kraftstoffverbrauch und einem verbesserten Abgas-Emissionsverhalten der Brennkraftmaschine führt. Zusätzlich sind zum Öffnen bzw. Schließen der Wastegate-Klappe aufgrund ihrer mittigen axialen Anordnung nur geringe Öffnungs- bzw. Schließkräfte erforderlich.

Vorzugsweise ist die Wastegate-Klappe bezüglich einer Draufsicht im Wesentlichen ellipsenförmig, insbesondere kreisförmig, ausgebildet. In Varianten sind auch andere geometrische Formen, beispielsweise vier- oder mehreckige Formen möglich. Bevorzugt bieten sich dabei solche geometrische Formen an, bei welchen sich Öffnungs- und Schließ-Kräfte zum Öffnen bzw. Schließen der Wastegate-Klappe gegenseitig aufheben.

In einer besonders bevorzugten Ausführungsform kann daran gedacht sein, die Wastegate-Klappe jeweils mittels Verschrauben, Vernieten, Verstemmen, Verbördeln, Verschweißen oder Verspannen an der Spindel zu befestigen.

Ferner kann wenigstens ein Dämpfungselement, insbesondere in der Art eines Federelements, am Wastegate-Klappenmechanismus angeordnet sein. Das Dämpfungselement kann insbesondere so angeordnet sein, dass die Wastegate-Klappe gegenüber der Spindel vorgespannt ist. Das Dämpfungselement kann insbesondere zwischen der Wastegate-Klappe und der Spindel angeordnet sein. Dies ermöglicht einen Spiel-Ausgleich eines mechanischen Spiels zwischen Wastegate-Klappe und Spindel, welcher wiederum erforderlich sein kann, um Herstellungstoleranzen, Verschleißerscheinungen, betriebsbedingte Ablagerungen (z.B. mit Rußpartikeln) in dem Wastegate-Klappenmechanismus oder ähnliches zu reduzieren bzw. z.B. thermische Verzüge des Ventilsitzes im Turbinengehäuse zu kompensieren. Zusätzlich kann mittels eines solchen Dämpfungselements die Gefahr eines unerwünschten "Prassel"-Geräusches der Wastegate-Klappe reduziert werden.

In einer alternativen bevorzugten Ausführungsform kann die Wastegate-Klappe integral mit der Spindel ausgebildet sein. Eine derartige Ausführungsform bietet sich insbesondere dann an, wenn sowohl Spindel als auch Wastegate-Klappe mittels Fräsen oder Gießen, insbesondere mittels Spritzguss, Schleuderguss oder Schwerkraftguss (oder durch ein MIM- oder ECM-Verfahren) hergestellt werden sollen.

Gemäß einem zweiten Aspekt weist der erfindungsgemäße Abgasturbolader einen Wastegate-Klappenmechanismus auf, der eine jeweils drehbar an dem Turbinengehäuse gelagerte erste und zweite Spindel umfasst, an welcher jeweils drehfest eine erste bzw. zweite Wastegate-Klappe angebracht ist. Die beiden Wastegate-Klappen sind jeweils mittels der ersten bzw. zweiten Spindel drehbar zwischen einer geschlossenen Position, in welcher die beiden Wastegate-Klappen gemeinsam die Wastegate-Öffnung des Wastegate-Klappenmechanismus verschließen, und einer geöffneten Position, in welcher die beiden Wastegate-Klappen die Wastegate-Öffnung zum Durchströmen mit einem Abgas, insbesondere einer Brennkraftmaschine, freigeben.

Mittels einer derartigen Anordnung wird ein Rückstau des die Wastegate-Öffnung durchströmende Abgases bei wenigstens teilweise geöffneten Wastegate-Klappen gegenüber einem herkömmlichen Wastegate-Klappenmechanismus deutlich reduziert, da bei wenigstens teilweiser Öffnung der beiden Wastegate-Klappen zwei (anstelle nur eines) Durchlass-Spalte in einer Durchströmungsrichtung des Abgases durch die Wastegate-Öffnung entstehen, was insbesondere bei Lastwechseln der Brennkraftmaschine zu einem schnelleren Druckabbau in dem Turbinengehäuse führt. Des Weiteren ermöglicht der erfindungsgemäße Wastegate-Klappenmechanismus eine genaue Steuerung des Betriebspunkts des Abgasturboladers und auch der diesen verwendenden Brennkraftmaschine, was letztlich zu einem reduzierten Kraftstoffverbrauch und einem verbesserten Abgas-Emissionsverhalten der Brennkraftmaschine führt. Im Falle eines gleichzeitigen, also simultanen Schließens der beiden Wastegate-Klappen kann zudem eine besonders hohe Dichtigkeit der mittels der beiden Wastegate-Klappen verschlossenen Wastegate-Öffnung erzielt werden.

Vorzugsweise sind die beiden Wastegate-Klappen bezüglich der beiden axialen Enden der jeweiligen Spindel mittig an dieser angebracht.

In einer bevorzugten Ausführungsform kann der Abgasturbolader eine Antriebseinheit aufweisen, welcher entweder mit der ersten Spindel oder mit der zweiten Spindel zum Antreiben der ersten oder zweiten Spindel antriebsverbunden ist, wobei die erste Spindel mit der zweiten Spindel antriebsverbunden ist. Dies ermöglicht einen technisch besonders einfachen Aufbau des erfindungsgemäßen Abgasturboladers, da nur eine einzige Antriebseinheit erforderlich ist, um sowohl die erste als auch die zweite Spindel anzutreiben. Gemäß der bevorzugten Ausführungsform wird also entweder die erste oder die zweite Spindel direkt von der Antriebseinheit angetrieben, während mittels der Antriebsverbindung der ersten mit der zweiten Spindel die jeweils andere Spindel indirekt angetrieben wird. Vorzugsweise ist die erste Spindel mit der zweiten Spindel derart antriebsverbunden ist, dass eine Drehbewegung der ersten Spindel in eine erste Drehrichtung eine gegengleiche Drehbewegung der zweiten Spindel in eine zu der ersten Drehrichtung entgegengesetzte zweite Drehrichtung bewirkt und umgekehrt. Dies ermöglicht einen Betrieb der beiden Spindeln in einer vorteilhaften hochsymmetrischen Anordnung relativ zueinander.

In einer weiterbildenden Ausführungsform kann die erste Spindel mittels einer Zahnrad-Mechanik oder einem Kettentrieb oder einem Schubketten-Gliederband mit der zweiten Spindel antriebsverbunden sein oder/und kann die erste oder/und zweite Spindel jeweils wenigstens teilweise als Zahnrad ausgebildet sein. Somit lässt sich technisch auf sehr einfache Weise die erste Spindel mit der zweiten Spindel antriebsverbinden. Zusätzlich oder alternativ kann die erste oder zweite Spindel mit der Antriebseinheit mittels einer Zahnrad-Mechanik oder einem Kettentrieb oder einem Schubketten-Gliederband mit der zweiten Spindel antriebsverbunden sein, so dass auch die Antriebsverbindung der ersten oder zweiten Spindel mit der Antriebseinheit auf technisch einfache Weise realisiert werden kann.

Vorzugsweise weisen die erste oder/und zweite Wastegate-Klappe bezüglich einer Draufsicht im Wesentlichen jeweils die Form eines Kreissegments, insbesondere eines Halbkreises auf, wobei die erste bzw. zweite Wastegate-Klappe jeweils mittels eines durch eine Kreissehne des Kreissegments definierten Befestigungsabschnitts an der ersten bzw. zweiten Spindel befestigt ist. In Varianten sind auch andere geometrische Formen, beispielsweise runde, ovale, vier- oder mehreckige Formen möglich. Bevorzugt bieten sich solche geometrische Formen an, bei welchen sich Öffnungs- und Schließ-Kräfte zum Öffnen bzw. Schließen der Wastegate-Klappen gegenseitig aufheben.

In einer besonders bevorzugten Ausführungsform kann daran gedacht sein, die erste oder/und zweite Wastegate-Klappe jeweils mittels Verschrauben, Vernieten, Verstemmen, Verbördeln, Verschweißen oder Verspannen an der ersten bzw. zweiten Spindel zu befestigen. Zusätzlich kann zwischen der ersten Wastegate-Klappe und der ersten Spindel oder/und zwischen der zweiten Wastegate-Klappe und der zweiten Spindel jeweils wenigstens ein Dämpfungselement, insbesondere in der Art eines Federelements, angeordnet sein. Alternativ kann das Dämpfungselement so angeordnet sein, dass die Wastegate-Klappe gegenüber der Spindel vorgespannt ist. Dies ermöglicht einen Spiel-Ausgleich eines mechanischen Spiels zwischen Wastegate-Klappe und Spindel, welcher erforderlich sein kann, um Herstellungstoleranzen, Verschleißerscheinungen, betriebsbedingte Ablagerungen in dem Wastegate-Klappenmechanismus oder ähnliches zu reduzieren. Zusätzlich kann mittels eines solchen Dämpfungselements die Gefahr eines unerwünschten "Prasselns" der Wastegate-Klappen reduziert werden.

In einer alternativen bevorzugten Ausführungsform kann die erste und zweite Wastegate-Klappe jeweils integral mit der ersten bzw. zweiten Spindel ausgebildet sein. Eine derartige Ausführungsform bietet sich insbesondere dann an, wenn sowohl Spindel als auch Wastegate-Klappe mittels Fräsen oder Gießen, insbesondere mittels Spritzguss, Schleuderguss oder Schwerkraftguss (oder durch ein MIM- oder ECM-Verfahren) hergestellt werden sollen.

In einer bevorzugten Ausführungsform können die beiden Spindeln relativ zu der Wastegate-Öffnung im Wesentlichen spiegelsymmetrisch in einem Mittenbereich der Wastegate-Öffnung angeordnet sein, so dass mittels der ersten Wastegate-Klappe ein erster Teilbereich der Wastegate-Öffnung verschließbar ist und mittels der zweiten Wastegate-Klappe ein zu dem ersten Teilbereich komplementärer zweiter Teilbereich der Wastegate-Öffnung verschließbar ist. In einer dazu alternativen Ausführungsform können die beiden Spindeln relativ zu der Wastegate-Öffnung im Wesentlichen spiegelsymmetrisch jeweils in einem ersten bzw. zweiten Randabschnitt der Wastegate-Öffnung angeordnet sein, so dass mittels der ersten Wastegate-Klappe ein erster Teilbereich der Wastegate-Öffnung verschließbar ist und mittels der zweiten Wastegate-Klappe ein zu dem ersten Teilbereich komplementärer zweiter Teilbereich der Wastegate-Öffnung fluiddicht verschließbar ist. Hierbei ist in dem Mittenbereich der Wastegate-Öffnung ein in Richtung der beiden Spindeln verlaufender Steg, der in diesem Bereich als Wastegate-Sitz wirkt, angeordnet. Dieser unterteilt die Wastegate-Öffnung in den ersten und zweiten Teilbereich, so dass in der geschlossenen Position der Wastegate-Öffnung die beiden Spindeln jeweils mit einem Randabschnitt auf dem als Wastegate-Sitz wirkenden Steg aufliegen.

In beiden vorgenannten Ausführungsformen kann aufgrund der hochsymmetrischen Anordnung der beiden Wastegate-Klappen, einschließlich der beiden Spindeln zueinander das Auftreten von störenden "Prasselgeräuschen" durch Schwingungsanregung aufgrund von bereits eingangs erläuterten Abgaspulsationen vollständig oder zumindest weitgehend vermieden werden. Mittels der hochsymmetrischen Anordnung der Wastegate-Klappen kann zu einer bestimmten auf eine erste der beiden Wastegate-Klappen wirkende Kraft symmetriebedingt auf die jeweils andere (zweite) Wastegate-Klappe eine entsprechende Gegenkraft erzeugt werden, welche die auf die erste Wastegate-Klappe wirkende Kraft weitgehend oder vollständig aufhebt. Auf diese Weise kann ein weitgehend oder sogar vollständig kräftefreies System erzeugt werden, was die mechanische Stabilität, insbesondere hinsichtlich eines störenden Auftretens von "Prasselgeräuschen" der Wastegate-Klappen, stark verbessert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: ein erstes Ausführungsbeispiel eines erfindungsgemäßen Abgasturboladers (gemäß dem ersten Aspekt),
- Fig. 2: Wastegate-Klappe und Spindel gemäß der Fig.1 in einer Draufsicht,
- Fig. 3: eine Längsschnittansicht von Wastegate-Klappe und Spindel,
- Fig. 4: eine Variante der Figur 3,
- Fig. 5: ein zweites Ausführungsbeispiel eines erfindungsgemäßen Abgasturboladers (gemäß dem zweiten Aspekt),
- Fig. 6: ein drittes Ausführungsbeispiel eines erfindungsgemäßen Abgasturboladers (gemäß dem zweiten Aspekt),
- Fig. 7: eine Variante des zweiten und dritten Ausführungsbeispiels in einer Längsschnittansicht.

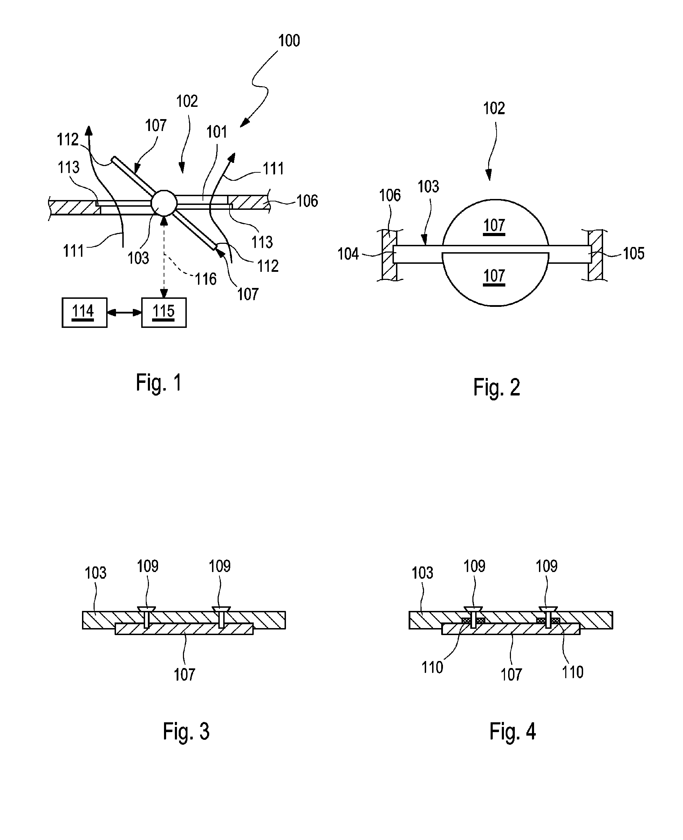

In der Figur 1 ist ein erstes Ausführungsbeispiel des erfindungsgemäßen Abgasturboladers gemäß dem ersten Aspekt in einer Längsschnittansicht dargestellt und mit 100 bezeichnet. Der Abgasturbolader 100 weist ein Turbinengehäuse 106 auf, in welchem eine Wastegate-Öffnung 101 angeordnet ist. Der Abgasturbolader 100 umfasst ferner einen Wastegate-Klappenmechanismus 102 zum Einstellen eines Öffnungsgrades der Wastegate-Öffnung 101.

Der Wastegate-Klappenmechanismus 102 umfasst hierzu eine Spindel 103, welche wie in der Figur 2 gezeigt mit ihren beiden axialen Enden 104, 105 jeweils drehbar an dem Turbinengehäuse 106 gelagert ist. Erfindungsgemäß ist eine Wastegate-Klappe 107 drehfest und bezüglich der beiden axialen Enden 104, 105 der Spindel im Wesentlichen mittig an dieser angebracht (vgl. Fig. 2), und zwar derart, dass die Wastegate-Klappe 107 mittels der Spindel 103 drehbar ist zwischen einer geschlossenen Position, in welcher die Wastegate-Klappe 107 die Wastegate-Öffnung 101 verschließt und einer geöffneten Position, in welcher die Wastegate-Klappe 107 die Wastegate-Öffnung 101 wie in der Figur 1 gezeigt zum Durchströmen mit einem Abgas (vgl. Pfeile 111) freigibt. In der geschlossenen Position (nicht gezeigt) liegt ein Randbereich 112 der Wastegate-Klappe 107 auf einem die Wastegate-Öffnung 101 einfassenden Ventilsitz 113 auf. Mittels einer derartigen Anordnung wird ein Rückstau des die Wastegate-Öffnung 101 durchströmende Abgases bei wenigstens teilweise geöffneter Wastegate-Klappe 107 gegenüber einem herkömmlichen Wastegate-Klappenmechanismus deutlich reduziert. Des Weiteren ermöglicht der erfindungsgemäße Wastegate-Klappenmechanismus 102 eine genaue Steuerung eines Betriebspunkts des Abgasturboladers 100 und auch der diesen verwendenden Brennkraftmaschine, was letztlich zu einem reduzierten Kraftstoffverbrauch und einem verbesserten Abgas-Emissionsverhalten der Brennkraftmaschine führt.

Die Wastegate-Klappe 107 kann bezüglich einer Draufsicht kreisrund ausgebildet sein. In Varianten sind selbstverständlich auch andere geometrische Formen, beispielsweise eine Ellipse, an. Auch vier- oder mehreckige Formen sind möglich. Bevorzugt bieten sich solche geometrische Formen an, bei welchen sich Öffnungs- und Schließ-Kräfte zum Öffnen bzw. Schließen der Wastegate-Klappe 107 gegenseitig aufheben.

Die Figur 3 zeigt nun grobschematisch die Wastegate-Klappe 107 in einem an der Spindel 103 befestigten Zustand. Die Befestigung kann mittels geeigneter Fixierungselemente 109, beispielsweise in Form von herkömmlichen Schrauben, erfolgen. In der Figur 3 sind exemplarisch zwei solche Fixierungselemente 109 gezeigt; es ist klar, dass grundsätzlich jedoch auch eine andere Anzahl von Fixierungselementen 109 verwendet werden kann.

Alternativ kann die Wastegate-Klappe 107 auch mittels Vernieten, Verstemmen, Verbördeln, Verschweißen oder Verspannen an der Spindel 103 befestigt sein. Die Wastegate-Klappe 107 kann auch jeweils integral mit der Spindel 103 ausgebildet sein. Eine derartige Ausführungsform bietet sich insbesondere dann an, wenn sowohl Spindel 103 als auch Wastegate-Klappe 107 mittels Fräsen oder Gießen, insbesondere mittels Spritzguss, Schleuderguss oder Schwerkraftguss (oder durch ein MIM- oder ECM-Verfahren) hergestellt werden sollen.

In einer in der Figur 4 grobschematisch gezeigten, weiterbildenden Variante kann zwischen der Wastegate-Klappe 107 und der Spindel 103 ein Dämpfungselement 110, insbesondere in der Art eines Federelements, angeordnet sein. In der Figur 4 sind exemplarisch zwei solche Dämpfungselemente 110 gezeigt. Das Dämpfungselement 110 ermöglicht einen Spiel-Ausgleich eines mechanischen Spiels zwischen der Wastegate-Klappe 107 und der Spindel 103, um Herstellungstoleranzen, Verschleißerscheinungen, betriebsbedingte Ablagerungen (z.B. mit Rußpartikeln) in dem Wastegate-Klappenmechanismus 102 oder ähnliches zu reduzieren. Zusätzlich kann mittels des Dämpfungselements die Gefahr eines unerwünschten "Prassel"-Geräusches der Wastegate-Klappe 107, welches durch Abgaspulsationen hervorgerufen werden kann, reduziert werden.

Optional kann der Abgasturbolader 100 eine Steuereinrichtung 114 (vgl. Fig. 1) aufweisen, mittels welcher eine Drehbewegung der Spindel 103 gesteuert wird. Die Spindel 103 kann dabei mittels einer geeigneten Antriebseinheit angetrieben sein, welche beispielsweise eine mit der Spindel 103 verbundene Hebelanordnung (Pfeil 116) und einen externen Aktuator 115 umfassen kann. In diesem Fall steuert die der Steuerungseinrichtung 114 den Aktuator 115 an. Die Ansteuerung des Wastegate-Klappenmechanismus 106 kann dabei bevorzugt mittels eines selbstlernenden, adaptiven Steuerungsalgorithmus erfolgen. Die Ansteuerung kann alternativ oder zusätzlich auch unter Verwendung geeigneter Sensoren (nicht gezeigt) erfolgen, welche eine Menge des durch die Wastegate-Öffnung 101 strömenden Abgas-Massenstroms bestimmen können. Basierend auf diesen Messdaten, optional unter Zuhilfenahme geeigneter Kennfelder, die in der Steuerungseinrichtung 114 abgelegt sein können, kann dann eine optimale Einstellung eines Öffnungsgrades der Wastegate-Öffnung 101 mittels der Wastegate-Klappe 107 erfolgen.

Insbesondere kann mittels der Steuerungseinrichtung 114 hinsichtlich einer Bewegung der Wastegate-Klappe 107 in die geschlossene Position eine sog. "Soft-Landing"-Funktion realisiert sein, bei der die Wastegate-Klappe 107 vor dem Auftreffen auf den Ventilsitz 113 rechtzeitig abgebremst wird, um unerwünschte Beschädigungen an der Wastegate-Klappe 107 oder dem Ventilsitz 113 zu vermeiden.

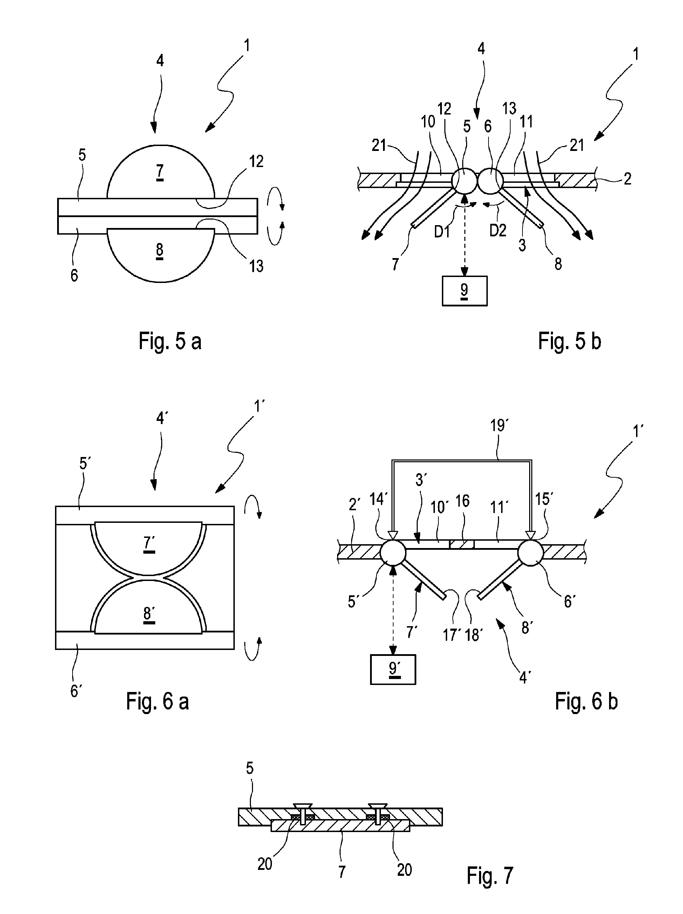

In der Fig. 5 ist nun ein zweites Ausführungsbeispiel eines erfindungsgemäßen Abgasturboladers gemäß dem zweiten Aspekt mit 1 bezeichnet. Die Fig. 5a zeigt dabei eine Draufsicht, und die Fig. 5b eine Längsschnittansicht des erfindungsgemäßen Abgasturboladers 1. Der Abgasturbolader 1 weist ein Turbinengehäuse 2 auf, welches in der Fig. 5 nur ausschnittsweise gezeigt ist und in welchem eine Wastegate-Öffnung 3 angeordnet ist. Der Abgasturbolader 1 weist ferner einen Wastegate-Klappenmechanismus 4 zum Einstellen eines Öffnungsgrads der Wastegate-Öffnung 3 auf. Hierzu umfasst der Wastegate-Klappenmechanismus 4 eine jeweils drehbar an dem Turbinengehäuse 2 gelagerte erste und zweite Spindel 5, 6 auf, an welcher jeweils drehfest eine erste bzw. zweite Wastegate-Klappe 7, 8 angebracht ist. Vorzugsweise ist die erste bzw. zweite Spindel 5, 6 dabei beidseitig an dem Turbinengehäuse 2 gelagert. Die beiden Wastegate-Klappen 7, 8 sind in der Darstellung der Fig. 5b ferner derart angeordnet, dass sie die Wastegate-Öffnung 3 teilweise verschließen. Erfindungsgemäß sind die beiden Wastegate-Klappen 7, 8 mittels der ersten bzw. zweiten Spindel 5, 6 drehbar zwischen einer geschlossenen Position, in welcher die beiden Wastegate-Klappen 7, 8 gemeinsam die Wastegate-Öffnung 3 verschließen und einer geöffneten Position, in welcher die beiden Wastegate-Klappen die Wastegate-Öffnung 3 zum Durchströmen mit einem Abgas freigeben. Das Durchströmen eines Abgases, vorzugsweise einer Brennkraftmaschine, ist in der Fig. 5b schematisch durch die Pfeile 21 angedeutet.

Eine Drehbewegung der ersten bzw. zweiten Spindel 5, 6 kann mittels einer Antriebseinheit 9 bewirkt werden, welche vorzugsweise mit nur einer der beiden Spindeln 5, 6 antriebsverbunden ist. In der Darstellung der Fig. 5b ist die Antriebseinheit 9 exemplarisch mit der ersten Spindel 5 antriebsverbunden. Die Antriebseinheit 9 kann ein (nicht gezeigtes) externes Aktuatorelement aufweisen, welches mittels einer geeigneten Hebelgeometrie mit der ersten Spindel 5 gekoppelt sein kann. Das Aktuatorelement kann als pneumatischer oder elektrischer Aktuator ausgeführt sein und insbesondere einen beispielsweise mittels eines HallSensors realisierten Positionssensor umfassen.

In dem zweiten Ausführungsbeispiel gemäß der Fig. 5 sind die beiden Spindeln 5, 6 relativ zu der Wastegate-Öffnung 3 im Wesentlichen spiegelsymmetrisch in einem Mittenbereich der Wastegate-Öffnung 3 angeordnet. Auf diese Weise ist mittels der ersten Wastegate-Klappe 7 ein erster Teilbereich 10 der Wastegate-Öffnung 3 verschließbar, während mittels der zweiten Wastegate-Klappe 8 ein zu dem ersten Teilbereich 10 komplementärer zweiter Teilbereich 11 der Wastegate-Öffnung 3 verschließbar ist. Eine Antriebsverbindung der ersten mit der ersten Spindel 5 mit der zweiten Spindel 6 erfolgt derart, dass eine Drehbewegung der ersten Spindel 5 in eine erste Drehrichtung D1 eine gegengleiche Drehbewegung der zweiten Spindel 6 in eine zu der ersten Drehrichtung entgegengesetzte zweite Drehrichtung D2 bewirkt und umgekehrt. Eine derartige Kopplung kann beispielsweise dadurch erzielt werden, dass die erste und zweite Spindel 5, 6 wenigstens teilweise als Zahnrad ausgebildet sind, welche sich ineinander verzahnen und somit eine Antriebsverbindung mit gegengleicher Drehrichtung der beiden Spindeln ausbilden.

Die erste und zweite Wastegate-Klappe 7, 8 können bezüglich einer Draufsicht im Wesentlichen jeweils die Form eines Kreissegments aufweisen (vgl. Fig. 5a). Besonders bevorzugt ist dabei die Form eines Halbkreises, wobei die erste und zweite Wastegate-Klappe 7, 8 jeweils mittels eines durch eine Kreissehne des Kreissegments definierten Befestigungsabschnitts 12, 13 an der ersten bzw. zweiten Spindel 5, 6 befestigbar sind. Die Wastegate-Klappe kann alternativ auch rund, oval, vier- oder mehreckig ausgebildet sein. Bevorzugt sind grundsätzlich alle geometrischen Formen, bei welchen sich bei einem Öffnungs- bzw. Schließvorgang der Wastegate-Klappe auftretenden Kräfte gegenseitig im Wesentlichen aufheben.

Die erste und zweite Wastegate-Klappe 7, 8 können mit der ersten bzw. zweiten Spindel 5, 6 verschraubt, vernieten, verstemmt, verbördelt, verschweißt oder verspannt sein. Alternativ können die erste und zweite Wastegate-Klappe 7, 8 und die erste bzw. zweite Spindel 5, 6 jeweils einstückig ausgebildet sein.

Vorzugsweise sind die beiden Wastegate-Klappen 5, 7bezüglich der beiden axialen Enden der jeweiligen Spindel 5, 6 mittig an dieser angebracht.

In einem in den Fig. 6a und 6b gezeigten dritten Ausführungsbeispiel des Abgasturboladers 1' gemäß dem zweiten Aspekt sind die beiden Spindeln 5', 6' relativ zu der Wastegate-Öffnung 3' im Wesentlichen spiegelsymmetrisch jeweils in einem ersten bzw. zweiten Randabschnitt 14', 15' der Wastegate-Öffnung 3' angeordnet, so dass mittels der ersten Wastegate-Klappe 7' ein erster Teilbereich 10' der Wastegate-Öffnung 3' verschließbar ist und mittels der zweiten Wastegate-Klappe 8' ein zu dem ersten Teilbereich 10' komplementärer zweiter Teilbereich 11' der Wastegate-Öffnung 3' verschließbar ist. Des Weiteren ist in dem Mittenbereich der Wastegate-Öffnung 3' ein in Richtung der beiden Spindeln 5', 6' verlaufender Steg 16' angeordnet, welcher die Wastegate-Öffnung 3' in den ersten und zweiten Teilbereich 10', 11' unterteilt. Der Steg 16' wirkt dabei in dem Mittenbereich der Wastegate-Öffnung 3' als Wastegate-Sitz, wobei in der geschlossenen Position die beiden Wastegate-Klappen jeweils mit einem Randabschnitt 17' bzw. 18' auf dem Steg 16' aufliegen.

Auch in diesem dritten Ausführungsbeispiel ist die erste Spindel 5' mit einer Antriebseinheit 9' antriebsverbunden (alternativ kann natürlich auch die zweite Spindel 6' mit der Antriebseinheit 9' antriebsverbunden sein), wobei eine derartige Antriebsverbindung technisch wieder mittels eines äußeren Aktuatorelements erfolgen kann, welches mit einem Endabschnitt der durch das Turbinengehäuse 2' geführten ersten Spindel 5' in Wirkverbindung stehen kann zum Antreiben der ersten Spindel 5'. Der Antrieb der zweiten Spindel 6' erfolgt dann nicht direkt durch die Antriebseinheit 9', sondern indirekt über die erste Spindel 5', welche mit der zweiten Spindel 6' antriebsverbunden ist. Die Antriebsverbindung zwischen der ersten und zweiten Spindel 5', 6' kann mittels einer geeigneten Zahnrad-Mechanik, z.B. einem Kettentrieb, einem Schubketten-Gliederband (vgl. Bezugszeichen 19' in der Fig. 6b), o.ä. erfolgen.

In einer weiteren Variante, welche bereits als solche schutzfähig ist und mit dem Ausführungsbeispiel gemäß den Fig. 5 und 6 kombiniert werden kann, ist zwischen der ersten Wastegate-Klappe 7 und der ersten Spindel 5 wenigstens ein Dämpfungselement 20 angeordnet. In der Darstellung der Fig. 7 sind exemplarisch zwei solche Dämpfungselemente 20 gezeigt. Es ist klar, dass in Varianten auch eine andere Anzahl an Dämpfungselementen 20 möglich ist. Dementsprechend kann auch zwischen der zweiten Wastegate-Klappe 8 und der zweiten Spindel 6 wenigstens ein Dämpfungselement angeordnet sein. Das Dämpfungselement an sich kann vorzugsweise in der Art eines Federelements ausgebildet sein.

## Patentansprüche

1. Abgasturbolader (100) für eine Brennkraftmaschine, insbesondere eines Kraftfahrzeugs,
- mit einem Turbinengehäuse (106), in welchem eine Wastegate-Öffnung (101) angeordnet ist,
- mit einem Wastegate-Klappenmechanismus (102) zum Einstellen eines Öffnungsgrades der Wastegate-Öffnung (101),
- wobei der Wastegate-Klappenmechanismus (102) eine Spindel (103) umfasst, welche mit ihren beiden axialen Enden (104, 105) jeweils drehbar an dem Turbinengehäuse (106) gelagert ist,
- wobei der Wastegate-Klappenmechanismus (102) eine Wastegate-Klappe (107) umfasst, welche drehfest und bezüglich der beiden axialen Enden (104, 105) der Spindel (103) mittig an dieser angebracht ist, derart, dass die Wastegate-Klappe (107) mittels der Spindel (103) drehbar ist zwischen einer geschlossenen Position, in welcher die Wastegate-Klappe (107) die Wastegate-Öffnung (101) verschließt und einer geöffneten Position, in welcher die Wastegate-Klappe (107) die Wastegate-Öffnung (101) zum Durchströmen mit einem Abgas freigibt.

2. Abgasturbolader (100) nach Anspruch 1,
**dadurch gekennzeichnet, dass**
die Wastegate-Klappe (107) bzgl. einer Draufsicht ellipsenförmig, insbesondere kreisförmig, ausgebildet ist.

3. Abgasturbolader (100) nach Anspruch 1 oder 2,
**dadurch gekennzeichnet, dass**
die Wastegate-Klappe (107) jeweils mittels Verschrauben, Vernieten, Verstemmen, Verbördeln, Verschweißen oder Verspannen an der Spindel (103) befestigt ist.

4. Abgasturbolader (100) nach einem der Ansprüche 1 bis 3,
**dadurch gekennzeichnet, dass**
- die Wastegate-Klappe (107) gegenüber der Spindel (103) durch wenigstens ein Federelement (110) vorgespannt ist.

5. Abgasturbolader (1; 1') für eine Brennkraftmaschine, insbesondere eines Kraftfahrzeugs,
- mit einem Turbinengehäuse (2, 2'), in welchem eine Wastegate-Öffnung (3, 3') angeordnet ist,
- mit einem Wastegate-Klappenmechanismus (4, 4') zum Einstellen eines Öffnungsgrades der Wastegate-Öffnung (3, 3'),
**dadurch gekennzeichnet, dass**
- der Wastegate-Klappenmechanismus (3, 3') eine jeweils drehbar an dem Turbinengehäuse (2, 2') gelagerte erste und zweite Spindel (5, 6; 5', 6') umfasst, an welcher jeweils drehfest eine erste bzw. zweite Wastegate-Klappe (7, 8; 7', 8') angebracht ist,
- die beiden Wastegate-Klappen (7, 8; 7', 8') jeweils mittels der ersten bzw. zweiten Spindel (5, 6, 5', 6') drehbar sind zwischen einer geschlossenen Position, in welcher die beiden Wastegate-Klappen (7, 8; 7', 8') gemeinsam die Wastegate-Öffnung (3; 3') verschließen, und einer geöffneten Position, in welcher die beiden Wastegate-Klappen (7, 8; 7', 8') die Wastegate-Öffnung (3, 3') zum Durchströmen mit einem Abgas freigeben.

6. Abgasturbolader (1; 1') nach Anspruch 5,
**dadurch gekennzeichnet, dass**
- der Abgasturbolader (1, 1') eine Antriebseinheit (9; 9') aufweist, welche entweder mit der ersten Spindel (5; 5') oder mit der zweiten Spindel (6; 6') zum Antreiben der ersten oder zweiten Spindel (5, 6; 5', 6') antriebsverbunden ist,
- die erste Spindel (5; 5') mit der zweiten Spindel (6, 6') antriebsverbunden ist.

7. Abgasturbolader (1; 1') nach Anspruch 5 oder 6,
**dadurch gekennzeichnet, dass**
die erste Spindel (5; 5') mit der zweiten Spindel (6, 6') derart antriebsverbunden ist, dass eine Drehbewegung der ersten Spindel (5, 5') in eine erste Drehrichtung (D1) eine gegengleiche Drehbewegung der zweiten Spindel (6; 6') in eine zu der ersten Drehrichtung (D1) entgegengesetzte zweite Drehrichtung (D2) bewirkt und umgekehrt.

8. Abgasturbolader (1; 1') nach einem der Ansprüche 5 bis 7,
**dadurch gekennzeichnet, dass**
- die erste Spindel (5; 5') mittels einer Zahnrad-Mechanik (19') oder einem Kettentrieb oder einem Schubketten-Gliederband mit der zweiten Spindel antriebsverbunden ist, oder/und
- dass die erste und zweite Spindel (5, 6; 5', 6') jeweils wenigstens teilweise als Zahnrad ausgebildet sind.

9. Abgasturbolader (1; 1') nach einem der Ansprüche 5 bis 8,
**dadurch gekennzeichnet, dass**
- die erste und zweite Wastegate-Klappe (7, 8; 7', 8') bzgl. einer Draufsicht im Wesentlichen jeweils die Form eines Kreissegments, insbesondere eines Halbkreises, aufweisen,
- die erste und zweite Wastegate-Klappe (7, 8; 7', 8') jeweils mittels eines durch eine Kreissehne des Kreissegments definierten Befestigungsabschnitts (12) an der ersten bzw. zweiten Spindel befestigt sind.

10. Abgasturbolader (1; 1') nach einem der Ansprüche 5 bis 9,
**dadurch gekennzeichnet, dass**
die erste und zweite Wastegate-Klappe (7, 8; 7', 8') jeweils mittels Verschrauben, Vernieten, Verstemmen, Verbördeln, Verschweißen oder Verspannen an der ersten bzw. zweiten Spindel (5, 6; 5', 6') befestigt sind.

11. Abgasturbolader (1; 1') nach einem der Ansprüche 5 bis 10,
**dadurch gekennzeichnet, dass**
- zwischen der ersten Wastegate-Klappe (7, 7') und der ersten Spindel (5, 5') wenigstens ein erstes Dämpfungselement (20), insbesondere in der Art eines Federelements, angeordnet ist, oder/und
- zwischen der zweiten Wastegate-Klappe (8; 8') und der zweiten Spindel (6; 6') wenigstens ein zweites Dämpfungselement (20), insbesondere in der Art eines Federelements, angeordnet ist.

12. Abgasturbolader (1; 1') nach einem der Ansprüche 5 bis 9,
**dadurch gekennzeichnet, dass**
die erste und zweite Wastegate-Klappe (7, 8; 7', 8') jeweils integral mit der ersten bzw. zweiten Spindel (5, 6; 5', 6') verbunden sind.

13. Abgasturbolader (1) einem der Ansprüche 5 bis 12,
**dadurch gekennzeichnet, dass**
die beiden Spindeln (5, 6) relativ zu der Wastegate-Öffnung (3) im Wesentlichen spiegelsymmetrisch in einem Mittenbereich der Wastegate-Öffnung (3) angeordnet sind, so dass mittels der ersten Wastegate-Klappe (7) eine erster Teilbereich (10) der Wastegate-Öffnung (3) verschließbar ist und mittels der zweiten Wastegate-Klappe (8) ein zu dem ersten Teilbereich (10) komplementärer zweiter Teilbereich (11) der Wastegate-Öffnung (3) fluiddicht verschließbar ist.

14. Abgasturbolader (1') nach einem der Ansprüche 5 bis 12,
**dadurch gekennzeichnet, dass**
- die beiden Spindeln (5') relativ zu der Wastegate-Öffnung (3') im Wesentlichen spiegelsymmetrisch jeweils in einem ersten bzw. zweiten Randabschnitt (14', 15') der Wastegate-Öffnung (3') angeordnet sind, so dass mittels der ersten Wastegate-Klappe (7') eine erster Teilbereich (10') der Wastegate-Öffnung (3') verschließbar ist und mittels der zweiten Wastegate-Klappe (8') ein zu dem ersten Teilbereich (10') komplementärer zweiter Teilbereich (11') der Wastegate-Öffnung (3') fluiddicht verschließbar ist,
- in dem Mittenbereich der Wastegate-Öffnung (3') ein in Richtung der beiden Spindeln verlaufender Steg (16'), der in diesem Bereich als Wastegate-Sitz wirkt, angeordnet ist, welcher die Wastegate-Öffnung (3') in den ersten und zweiten Teilbereich (10', 11') unterteilt, so dass in der geschlossenen Position die beiden Wastegate-Klappen (7', 8') jeweils mit einem Randabschnitt auf dem als Wastegate-Sitz wirkenden Steg (16') aufliegen.

15. Abgasturbolader nach einem der Ansprüche 1 bis 14,
**dadurch gekennzeichnet,**
**dass** wenigstens ein Dämpfungselement (110, 20) am Klappenmechanismus (102, 3, 3') angeordnet ist.
